# EUROPEAN PATENT SPECIFICATION

(11) **EP 3 003 032 B1**
(45) Date of publication and mention of the grant of the patent: **06.11.2019**
(21) Application number: 14726351.1
(22) Date of filing: 23.05.2014
(51) Int. Cl.: A01N 63/04, A01N 25/22, A01N 25/06, A01P 7/04

(54) **SPRAY FORMULATION AND ITS USE IN PLANT PROTECTION**
SPRÜHFORMULIERUNG UND DEREN VERWENDUNG BEIM PFLANZENSCHUTZ
FORMULATION DE PULVÉRISATION ET SON UTILISATION DANS LA PROTECTION DES PLANTES

(30) Priority: 24.05.2013 EP 13169157
(43) Date of publication of application: 13.04.2016
(73) Proprietor: BIOCARE Gesellschaft für biologische Schutzmittel mbH, 37574 Einbeck (DE)
(72) Inventor: PATEL, Anant, 33604 Bielefeld (DE); LOHSE, Rieke, 33602 Bielefeld (DE); JAKOBS-SCHOENWANDT, Desiree, 32130 Enger (DE)
(74) Representative: Kröncke, Rolf
(86) International application number: PCT/EP2014/060674
(87) International publication number: WO 2014/187963

(56) References cited:
- EP-A1- 0 570 089
- EP-A1- 2 070 417
- WO-A1-2005/019436
- WO-A1-2009/126473
- WO-A1-2011/117351
- WO-A2-93/24013
- WO-A2-03/000051
- DATABASE WPI Week 200682 Thomson Scientific, London, GB; AN 2006-799910 XP002708413, -& CN 1 792 168 A (MAOMING CITY FOREST SCI RES INST) 28 June 2006 (2006-06-28)
- DATABASE WPI Week 201133 Thomson Scientific, London, GB; AN 2011-D35483 XP002708414, -& CN 101 967 463 A (UNIV JIANGNAN) 9 February 2011 (2011-02-09)
- VANDENBERG J D ET AL: "ASSESSMENT OF BEAUVERIA BASSIANA SPRAYS FOR CONTROL OF DIAMONDBACK MOTH (LEPIDOPTERA: PLUTELLIDAE) ON CRUCIFERS", JOURNAL OF ECONOMIC ENTOMOLOGY,, vol. 91, no. 3, 1 June 1998 (1998-06-01), pages 624-630, XP000801426, ISSN: 0022-0493
- MICHAEL J. FURLONG ET AL: "The Influence of Environmental Factors on the Persistence of Zoophthora radicans Conidia", JOURNAL OF INVERTEBRATE PATHOLOGY, vol. 69, no. 3, 1 May 1997 (1997-05-01), pages 223-233, XP055073892, ISSN: 0022-2011, DOI: 10.1006/jipa.1996.4649
- HADAPAD A B ET AL: "UV protectants for the biopesticide based on Bacillus sphaericus Neide and their role in protecting the binary toxins from UV radiation", JOURNAL OF INVERTEBRATE PATHOLOGY, SAN DIEGO, CA, US, vol. 100, no. 3, 1 March 2009 (2009-03-01) , pages 147-152, XP026075643, ISSN: 0022-2011, DOI: 10.1016/J.JIP.2008.12.003 [retrieved on 2009-01-03]
- ADJALLE K D ET AL: "Photostabilization of Bacillus thuringiensis fermented wastewater and wastewater sludge based biopesticides using additives", ACTA TROPICA, ELSEVIER SCIENCE BV., AMSTERDAM, NL, vol. 111, no. 1, 1 July 2009 (2009-07-01), pages 7-14, XP026084957, ISSN: 0001-706X, DOI: 10.1016/J.ACTATROPICA.2008.11.016 [retrieved on 2008-12-03]
- QUESADA-MORAGA E ET AL: "Endophytic Colonisation of Opium Poppy, Papaver somniferum, by an Entomopathogenic Beauveria bassiana Strain", MYCOPATHOLOGIA, KLUWER ACADEMIC PUBLISHERS, DO, vol. 161, no. 5, 1 May 2006 (2006-05-01), pages 323-329, XP019260007, ISSN: 1573-0832
- TADELE TEFERA ET AL: "Effect of inoculation method and plant growth medium on endophytic colonization of sorghum by the entomopathogenic fungus Beauveria bassiana", BIOCONTROL, KLUWER ACADEMIC PUBLISHERS, DO, vol. 54, no. 5, 24 March 2009 (2009-03-24) , pages 663-669, XP019727556, ISSN: 1573-8248, DOI: 10.1007/S10526-009-9216-Y
- Bruce L WAGNER ET AL: "Colonization of Corn, Zea mays, by the Entomopathogenic Fungus Beauveria bassiana", APPLIED AND ENVIRONMENTAL MICROBIOLOGY, 1 August 2000 (2000-08-01), pages 3468-3473, XP55003029, DOI: 10.1128/AEM.66.8.3468-3473.2000 Retrieved from the Internet: URL:http://aem.asm.org/cgi/reprint/66/8/34 68.pdf [retrieved on 2011-07-19]

## Description

### Spray formulation and its use in plant protection

The present invention relates to a spray formulation and its use in plant protection. In particular, said spray formulation is a spray formulation adapted for colonisation of plants with spores of endophytes, in particular, entomopathogenic endophytes. The spray formulation according to the present invention includes a surfactant, an UV-protecting compound, a nutrient, and spores of the endophytes. In another aspect, the present invention relates to the use of said spray formulation in plant protection, in particular, crop plant protection, and pest control, e.g. against plant pathogens and plant pests. Moreover, a method of preventing or treating infestation of plants with plant pathogens and plant pests is provided comprising the step of applying a spray formulation according to the present invention onto the plants or a part of the plants. Finally, a kit is provided comprising spores of endophytes and a spray formulation as defined herein.

### Prior art

Protection of plants against plant pathogens and plant pests is an ongoing demand in agriculture. Typically, commercial pesticides including insecticides are based on chemical entities. However, there is a continued demand from the government and the consumer to reduce chemical pesticides and insecticides accordingly. In particular, the public ask for bio food or organic products where harmful chemical components and chemical pesticides or insecticides are reduced or eliminated.

Moreover, the efficacy of many commercially available pesticides (e.g. insecticides, fungicides, acaricides) based on chemical entities has decreased due to increasing resistance in the plant pathogens including pests and weed.

Hence, there is an ongoing demand for alternative or complementary plant protection, like crop protection strategies including application of new biopesticides for pest control.

The term endophyte, as first introduced in 1866, broadly refers to any organism found within tissues of living autotrophs. The working definition for the term later was introduced by Petrini in 1991 and has since been accepted. It defines endophytes as organisms that at some time in their life colonise internal plant tissues without causing an apparent harm to their host. Endophytes comprise a diverse polyphyletic group of microorganisms that can exhibit more than one type of life history at distinct life stages. Endophytes are microorganisms that live at least parts of their life cycle more or less asymptomatically in plants.

### (Pirttilä et al. 2011, Endophytes of forest trees, Springer Dordrecht)

Endophytes may be transmitted either vertically (directly from parent to offspring) or horizontally (among individuals). Fungal endophytes are described in the art in being useful as biopesticides. Endophytes may benefit host plants by preventing pathogenic organism from colonising them. That is, a remarkable percentage of the endophytes have entomopathogenic activity. For example, by mycosis and/or release of a wide range of compounds, a control of plant diseases and plant pests, e.g. combating insect pests or plant pathogens including preventing infestation of plants with plant disease and plant pests is possible.

Pioneer work on entomopathogenic endophytes was conducted in *Beauveria bassiana* (Balsamo) Vuillemin (Ascomycota: Hypocreales) an ubiquitous soil-borne fungus that is bioactive against a wide insect host range (>700 insect species) and one of the most commercialized fungal biopesticides. B. *bassiana* is an entomopathogenic endophyte able to colonize a wide array of plant species many of which of economic interest. Moreover, the endophytic B. *bassiana* shows efficacy against a wide range of insect pests from within the plants and has the potential of becoming a cost-effective biocontrol agent. For example, the *Beauveria bassiana* strain ATCC 74040 is described as available tool for the control of pests, said strain is commercialised as biopesticide "Naturalis" by Troy Biosciences, but not for endophytic use, yet.

That is, to date, more than 700 species of fungi have been determined to be pathogenic to insects and mites. A well-known entomopathogenic fungus with worldwide distribution due to its wide host range is *Beauveria bassiana* (Balsamo-Crivelli) Vuillemin. The infection pathway of *B. bassiana* typically involves several steps. After attachment of the spores to the cuticle of the host insect, a germination tube penetrates the cuticle with the help of extracellular proteases. Invasion of B. *bassiana* into the host body depends on previous attachment to the integument, a process mediated by strong binding forces, specialized hyphae and suitable environmental conditions for the germination of the aerial conidia. After overcoming the host response and immune defence reaction the fungus starts to proliferate within the host by forming hyphal bodies or blastospores. Following the death of the host *B. bassiana* forms new aerial conidia at the surface of the body by saprophytic growth.

Today, more than 170 insect biocontrol agents based on fungal ento-mopathogens have been commercialized and over 75 % of these products are based on the hypocrealean fungi *B. bassiana, Metarhizium anisopliae, Isaria fumosorosea* and *Beauveria brongniartii.* Typically different formulations of aerial conidia are used to control herbivorous insect pests in the field. Two-thirds of these commercialized products are comprised of aerial conidia preparations of *B. bassiana* and *M. anisopliae,* although the drawbacks of aerial applications of these formulations have been known for long (Jackson et al. 2010, Biocontrol 55(1):129-145). The major cause for the environmental instability of biocontrol agents is solar irradiation because of the sensitivity of the fungal spores (Cohen and Joseph 2009, Appl Clay Sci 42(3-4):569-574). Therefore, their activity is limited under field conditions. Moreover, farmers have to take into account weather conditions during applications. Specifically rainfall will wash off the spores from the plant surface. Behavioural avoidance in case of contact with *B. bassiana* or grooming has been found in different insect orders, reducing the overall efficacy of *B. bassiana* as biocontrol agent.

For example, in WO 2011/117351 a new biopesticide and methods for pests control are described based on the endophytic *Beauveria bassiana,* DSM24665. As described therein, *Beauveria bassiana* allows endophytic colonisation of various plants including important commercial plants, thus, allowing to provide a protection against pests compared to epiphytic colonisation with *B. bassiana* of said crops.

Vandenberg J.D. et al, 1998, Biological and Microbial Control, 91 (3) 625 relates to an assessment of *Beauveria bassiana* sprays for control of a diamondback moth on crucifers. Tefera and Vidal, Biocontrol, 2009, 54:663-669 describe an effect of inoculation method and plant growth medium on endophytic colonization of sorghum by the entomopathogenic fungus *Beauveria bassiana.* In WO 2011/117351 A1 a bio-pesticide and a method for pest control is described.

Application of the bio-pesticides may be conducted by various means depending on the time point of application as well as the part of the plant to be treated.

### Formulation and application of endophytic entomopathogenic fungi

To obtain an effective biocontrol agent the fungal biomass has to be formulated to protect it against environmental stress factors. Three different strategies for inoculation of plants with endophytic entomopathogenic fungi can be considered: Either by an application of a spore suspension to the aerial parts of the plants, by seed coating, or by incorporating of fungal spores or mycelium into the soil. As in many cases it is still unknown how the endophytic entomopathogenic fungi exactly enter the plant formulation remains a scientifictechnical challenge.

As the idea of the utilization of endophytic entomopathogenic fungi like B. *bassiana* as biocontrol agents is still new, there are only few reports on formulation approaches. None explore and compare the three application options. Thus, the following discussion will deal mainly with the classical formulation of the entomopathogenic fungus *B. bassiana.* But it should be mentioned in particular that the desired formulations for endophytes have to deliver the fungi onto and into the plants and not into insects. This will obviously impact the formulation and application strategy.

### Formulation of fungal spores in sprays

The most prevailing inoculation method of entomopathogenic fungi is the application via spraying a spore suspension onto the leaves of plants infested with the target herbivores. Nearly all of the about 170 commercially available mycoinsecticides and mycoacaricides, out of which 58 are based on *B. bassiana,* are formulated in different kinds of sprays which contain in 70 % of the cases aerial conidia, often inevitably mixed with mycelium, from a solid-state fermentation. Because of their comparatively high shelf life, less research into formulation techniques is required to stabilize these spores. A half-life of more than 210 days was already obtained when aerial conidia were dried to 4-6 % moisture and stored at 25°C in 1997. Due to their hydrophobic surface characteristics, they are usually formulated in oil-based sprays or wettable powders. Blastospores from a submerged fermentation are thin-walled spores whose biological function is to grow inside of infected insects and not to maintain and survive in unfavourable habitats. The option to produce blastospores in advanced fermentation processes with high yields and productivity combined with rapid infection of insects has tempted research groups to investigate into formulations of these sensitive spores. Lane et al. (1991, Mycol Res 95(7):821-828) reported that blastospores of *B. bassiana* lose viability (i.e. ability to germinate) after few days when stored at room temperature other showed that a germination rate of 90 % was obtained when blastospores were spray-dried with milk powder and sugar beet syrup. Up to now no data on shelf life of blastospores formulations are published and no commercial product based on blastospores of *B. bassiana* is available.

Compared to blastospores, submerged conidiospores exhibit a lower speed-to-kill but a per se higher shelf life and that is why submerged conidiospores are the most promising spores for a stable formulation. But until now, no publication deals with the formulation of submerged conidiospores from *B. bassiana.*

In order to increase the viability, germination rate and shelf life of the endophytic *B. bassiana* on the plants and to help the fungus penetrate and colonize the plants with a suitable spray formulation it is suggested to include additives like wetters, stickers, humectants, nutrients and sunscreens. But until now, most research groups use simple spray formulations based on water and a detergent for for the colonization of plants with *B. bassiana* and other endophytic entomopathogenic fungi.

In case of spray formulations for the treatment of the leaves or sprouts or shoots, the spray formulation must fulfil certain requirements. In particular, when spraying the spray formulation on the plants, e.g. the leaves, the contact angle of the spray droplets with the leaves must be sufficient to allow spreading of the formulation over the plant surface and increasing points of entry for the endophytes. Moreover, protection against the environment must be provided, for example, protection against UV radiation or dehydration of the endophytes before the endophytes can colonise the plant accordingly. For example, humidity must be sufficient to allow germination of spores.

Furthermore, spray formulations on the basis of bacteria as biopesticides for treating and controlling plant pathogens have been described. EP 2070417 A1 describes novel microorganisms controlling plant pathogens isolated from *Cladosporium cladosporioides.* The effectiveness against infested plant pathogens is shown. In addition, it is noted that the isolate can grow in the phyllosphere. Besides, WO 03/000051 A2 describes a novel biofungicide. Therein a method for controlling fungal organisms is disclosed using *a B. licheniformis* strain having particular properties, namely, forming a dense spore coat with a high relative resistance to damage by UV light from the sun for treatment of fungal infestation. In CN20051120672, a suspension is identified suitable as a spray containing a combination of an entomopathogenic microorganism and a chemical insecticide for treating plants infested with pathogens, in particular, insects pests. CN20101536189 relates to a method for improving germination *rates of B. bassiana* spores in culture using a shaker but does not relate to a spray formulation.

Hence, an object of the present invention is to provide new spray formulations overcoming the drawbacks described above, in particular, being useful for spraying on leaves or shoots allowing a high colonisation rate of the plant thereafter. Another aim of the present invention is to provide spray formulations for use in the plant protection as well as methods of preventing or treating infestation of plants with plant diseases and pest including plant pathogens and insect pests.

### Summary of the present invention

In a first aspect, the present invention relates to a spray formulation adapted for colonisation of plants according to claim 1 with spores of endophytes, in particular, of entomopathogenic endophytes, said spray formulation comprises:
- a surfactant, in a range of from 0.01 to 5 wt.-% based on the total weight of the spay formulation;
- an UV-protecting compound, in a range of from 0.05 to 7 wt.-% based on the total weight of the spray formulation;
- a nutrient, in a range of from 0.1 to 7 wt.-% based on the total weight of the spray formulation wherein the nutrient is selected from carbon sources, sugars, or yeast extract;
- spores of the endophytes in an amount of 10² to 10⁸ spores/mL spray formulation; and
- optionally, hydrophilic liquid, in particular, water.

In another aspect, the present invention relates to the spray formulation according to present invention for use in plant protection, in particular, crop plant protection, against plant pests and plant pathogens, like insect pests.

In another embodiment, the present invention relates to a method of preventing or treating infestation of plants with plant pathogens and plant pests, in particular, of crop plants with crop pests whereby the spray formulation according to the present invention is applied on the plants for allowing colonisation thereof with endophytes.

Finally, the present invention provides a kit comprising spores of endophytes, preferably, entomopathogenic endophytes and, either in the same or in a separate container, a spray formulation according to the present invention.

### Brief description of the drawings

Figure 1: In figure 1 the penetration rate of oilseed rapes leaves are shown whereby the spores are dispersed either in water or in a spray formulation according to the present invention. In addition, controls with no spores, rightmost column, and without surfactant, second column from the right, are shown.
Figure 2: In figure 2 the viability of *B. bassiana* under UV-B stress is shown, As demonstrated, the UV-protecting compound TiO₂ increases viability of fungal spores dramatically. Further, the nutrient sugar beet molasses known to a UV protecting properties display an increased viability compared to the control.
Figure 3: In figure 3 colonisation of oilseed rape plants is analysed. The combination of surfactant (0.1 % Triton X-114) with nutrient (5 % sugar beet molasses) in the presence of UV-protecting agent (1% TiO₂) demonstrates high colonisation of the 8^{th} secondary leaves.
Figure 4: In figure 4 penetration of tomato leaves is shown. As demonstrated, penetration, and, consequently, colonization is possible with the spray formulation according to the present invention.

### Detailed description of the present invention

In a first aspect, the present invention relates to a spray formulation for colonisation of plants with spores of endophytes, in particular, of entomopathogenic endophytes, comprising:
- a surfactant, in a range of from 0.01 to 5 wt.-% based on the total weight of the spay formulation;
- an UV-protecting compound, in a range of from 0.05 to 7 wt.-% based on the total weight of the spray formulation;
- a nutrient, in a range of from 0.1 to 7 wt.-% based on the total weight of the spray formulation wherein the nutrient is selected from carbon sources, sugars, or yeast extract;
- spores of the endophytes in an amount of 10² to 10⁸ spores/mL spray formulation; and
- optionally, hydrophilic liquid, in particular, water.

The spray formulation according to the present invention is able to overcome the problems mentioned above. For example, when simply spraying the spores dispersed in water on the plants, only a few plants will be colonised. In contrast, the spray formulation according to the present invention including a surfactant, an UV-protecting compound and a nutrient together with the spores of the endophytes allows increasing the amount of spores on the treated leaves as well as successful colonisation of the leaves. That is, since the amount of spores maintained on the plants is increased, it is possible to decrease the number of spores to be applied on the plants. Not only colonisation of the plants was improved but also insect mortality. Moreover, by colonisation of the plants with endophytes a life long protection is possible. That is, the formulation according to the present invention improves the penetration and, subsequently, the colonisation of the plants with the endophytes, e.g. improving the rate of colonisation after treatment with the spores, but also the time of colonisation and the grade of colonisation of each part of the plants. In other words, the formulation improves the penetration or infiltration of the spores, in particular. the germinated spores and the mycelium into the plants or part of the plants. Improvement includes the time of colonisation as well as the extent of colonisation of the plant or part of the plant.

As used herein, the term "penetration" refers to the entry of the endophytes into the plant, e.g. into the leaves.

As used herein, the term "colonisation" refers to the entry of the endophytes into the plant and living in parts of the plant including leaves, roots, stem, seeds, and flower. In contrast to grow in the phyllosphere of a leaf, that is, on the surface of the leaves, colonisation relates to living and growing in the plant including the leaves. Colonisation refers in particular to endophytic colonisation.

That is, the use of the spray formulation according to the present invention comprising a surfactant, an UV-protecting compound, a nutrient, and the spores of the endophytes demonstrate successful colonisation of plants after treatment with the spray formulation. The spray formulation according to the present invention is a spray formulation wherein the surfactant is present in a range of from 0.01 to 5 wt.-% based on the total weight of the spray formulation; an UV-protecting compound, in a range of from 0.05 to 7 wt.-% based on the total weight of the spray formulation; a nutrient in a range of from 0.1 to 7 w.-% based on the total weight of the spray formulation; and spores of the endophytes, in an amount of 10² to 10⁸ spores/mL spray formulation.

The amount of surfactant is in a range of from 0.01 to 5 wt.-% based on the total weight of the spray formulation, like in a range of from 0.05 to 2 wt.-% based on the total weight of the spray formulation, in particular, in the range of from 0.1 to 0.5 wt.-% based on the total weight of the spray formulation. The amount of UV protecting compound is in a range of from 0.05 to 7 wt.-% based on the total weight of the spray formulation, like in a range of from 0.2 to 5 wt.-% based on the total weight of the spray formulation, in particular, in the range of from 0.5 to 2 wt.-% based on the total weight of the spray formulation. The amount of nutrient is in a range of from 0.1 to 7 wt.-% based on the total weight of the spray formulation, like in a range of from 0.2 to 5 wt.-% based on the total weight of the spray formulation, in particular, in the range of from 0.5 to 2 wt.-% based on the total weight of the spray formulation.

The amount of spores is in the range of from 10² to 10⁸ spores/mL spray formulation. Preferably, the amount of spores is in the range of from 10³ to 10⁷ spores/ml spray formulation, e.g. in the range of from 10⁴ to 10⁷, like 10⁴ to 10⁶ spores/mL spray formulation. The skilled person is well aware of suitable methods to determine the amount of spores necessary to prevent or treat infestation of the plants accordingly.

Typically, the remaining component in the spray formulation is a hydrophilic liquid, like water, or other hydrophilic solvents or other dispersion medium not harming the spores and being able to disperse homogenously the components of the spray formulation. The spray formulation may also be in form of a concentrate or may be in solid form ready for reconstitution by the hydrophilic liquid, e.g. in form of a wettable powder. Furthermore, the preferred amounts of the ingredients of the spray formulation as identified above refer to the total weight of a ready to use spray formulation. That is, the spray formulation may be in form of a ready to use solution or may be in form of a concentrate either containing the spores of the endophytes or not. Furthermore, the spray formulation may be provided in form of a wettable powder, for example, wherein the powdered spray formulation is supported on a carrier. Preferably, the carrier may be a carrier selected from diatomaceous earth, talc, clay, vermiculite, alginate, sugars, starch matrices or synthetic polymers. The concentrate of the spray formulation either in liquid or in solid form, may be reconstituted shortly before applying said spray formulation on the plants. Typically, the reconstitution is affected by the hydrophilic liquid, in particular, water. That is, the spray formulation may be in form of a wettable powder or granules with inert or nutritional carriers.

The spray formulation according to the present invention may contain additional components. For example, the spray formulation according to the present invention may contain an adhesive agent or sticker for increasing adhesion of the plants of the spray formulation. Suitable adhesive agents or stickers are: sugar beet molasses, cellulose derivates, skimmed milk, alginate, oil or sorbitol. It is preferred, that the adhesive agent is present in the range of from 0.1 to 5 wt.-% based on the total weight of the spray formulation.

Furthermore, the spray formulation may contain other adjuvants. For example, the spray formulation may comprise additionally a humectant. The humectant delays the evaporation of the liquid, typically, water, in the drops sprayed on the leaves.

As used herein, the term "humectant" includes compounds which may delay evaporation of the liquid of the spray formulation according to the present invention. In addition, the term "humectants" include compounds with liquid-, in particular, water-retaining properties e.g. to provide an environment favouring germination of the spores. Typical examples of humectants useful according to the present invention include biopolymers (polypeptides, polysaccharides), likegelatine, carboxymethylcellulose or xanthan. Furthermore, the spray formulation may contain filler. Said filler is useful to allow uniform preparation of the spray formulation, e.g. may suppress agglutination of components present in the spray formulation. Suitable examples of fillers include: clay, lactose or talc. The filler may be present in the range of from 15 to 45 wt.-% based on the total weight of the spray formulation. Moreover, the spray formulation may contain a stimulant facilitating germination of the spores and/or entry of the endophytes into the plant. As used herein, the term "stimulant" refers to substances that increase the germination of spores and/or the growth of the fungal hyphae on the plant surfaces. In addition elicitors and other plant signalling substances can be used as stimulants, too.

Suitable examples of stimulants are: amino acids, plant extracts, sugars, oligosaccharides, corn meal, chitosan or gelatine. The stimulants have preferably an activity of promoting germination of the spores and/or of promoting growth, as well as penetration, of the endophytes while germination and/or penetration. Preferably, the stimulants are present in the range of from 0.1 to 1 wt.-% based on the total weight of the spray formulation. Other suitable auxiliaries include anti foaming agents, said anti foaming agents which are well known to the skilled person, are preferably in the range of 0.01 to 1 wt.-% based on the total weight of the spray formulation. Furthermore a thickener may be present, the thickener may be present in the range of from 0.1 to 3 wt.-% based on the total weight of the spray formulation.

Depending on the type of application of the spray formulation and storage of the spray formulation, other auxiliaries or adjuvants may be present in the spray formulation according to present invention.

In this connection, it is noted that the term "comprise" and "comprising" or "contain" or "containing" which are used interchangeably herein include the embodiment of "consist" or "consisting of".

The spray formulation according to present invention contains a nutrient for the germinating spores. A used herein, the term "nutrient" refers to nutritious components that an organism utilizes to survive and grow, that is, any substance that nourishes an organism. Said nutrient is selected from a carbon source, in particular, a sugar beet molasses, sugars like sucrose or glucose or yeast extract. For example in case of sugar beet molasses, said molasses display additionally UV-protecting effect. That is, for example higher amounts, like 4% or above, like 5% or above of sugar beet molasses does have an UV-protecting effect apart from being a nutrient for the spores. In lower amounts, like about 1% or less, sugar beet molasses is mainly used for its nutrient properties.

The surfactant present in the spray formulation according to the present invention is preferably a non-ionic surfactant. Typical examples of suitable surfactants include Trisiloxane-based surfactants, Triton X-114 or other members of the Triton family. Furthermore, the surfactant is preferably a surface active substance having a surface tension of less than 40 mN/m, e.g. of less than 30 mN/m. The surfactant allows to improve the contact angle of the formulation on the leaves or shoots and to reduce the surface tension.

Moreover, the UV-protecting compound is preferably selected from titanium dioxide, sugar beet molasses or methyl red. That is, based on the sun beam effect, UV-radiation is reflected or absorbed. For bringing titanium dioxide into solution, it may be necessary to acidify the formulation allowing the titanium dioxide to be present in form of a suspension. In case of using beet molasses, the amount thereof is preferably 4% or above, like 5% or above.

The skilled person is well aware or can easily derive at suitable ingredients of the spray formulation, in particular, suitable surfactants, UV-protecting compounds and nutrients. The components of the spray formulation are selected in a way to minimize washing off the spray drops on the leaves, to increase the contact area between the plant, e.g. the leave, and the drops and to ease entry of the endophytes into the plant. In particular, the skilled person is well aware of selecting suitable components which do not harm viability of spores.

Typically the spores of the endophytes, in particular, of entomopathogenic endophytes, are present in an amount of from 10² to 10⁸ spores/mL spray formulation, like 10⁴ to 10⁷ spores/mL spray formulation based on the ready to use formulation.

Depending on the circumstances, the spray formulation according to the present invention may be in form of a single formulation or may be present in form of two or more separate parts in different containers. In an alternative embodiment, the spray formulation may be provided in separate parts containing on the one hand the spores, in a separate part the hydrophilic liquid, like water for reconstitution of a concentrate being present in a third part of the spray formulation according to the present invention.

The spray formulation according to the present invention is suitable for spraying by 0.5 to 4 bar with a commercial spray nozzle or in an ultra-low volume spray. Of course it is possible to apply the formulation by other means including brushing the plants or part of the plants or dipping etc.

As identified before, the endophytes are preferably entomopathogenic endophytes, thus, enabling combating pest infestation or plants.

It is preferred, that the spores of the endophytes are submerged conidiospores -blastospores or aero conidia or mixtures thereof. It is particular preferred, that a mixture of conidiospores and blastospores or conidiospores alone is used.

It is preferred, that these entomopathogenic endophytes are selected from the fungi *Beauveria bassiana* or *Metarhizium anisopliae,* today also referred to as *Metarhizium spp.* such as *M. anisopliae* Aggr.

The spray formulation according to the present invention is adapted for colonisation of plants with spores of endophytes. It is preferred, that said plants are crop plants or ornamental plants, in particular, of oilseed rape, tomato, corn (*Zea mays*), grain, cotton, potato, sugar beet, coffee plants, grapevine, vicia faba, chickpea, tobacco, soy, cacao plants, opium poppy, bean, cabbage, pine, rice, date palm, banana, orchids or sorghum. For example, the plants are plants multiplied and grown by micropropagation.

That is, the spray formulation represents a suitable biopesticide for plant protection of economically valuable crop plants or ornamental plants. In particular, the spray formulation allows to protect said plants from plant pathogens and plant pests, like insect pests, from within, just as transgenic plants do. However, in contrast to transgenic plants, the spray formulation useful as a biopesticide allow to colonise said plants with entomopathogenic endophytes, thus protecting them from the pest or the plant pathogen accordingly.

The spray formulation is particularly useful in plant protection like crop plant protection. Further, the spray formulation is useful in protection against plant pathogens and plant pests, like crop pests.

As used herein, the term "plant pests" include insects, nematodes, mites, and ticks. The term "plant pathogens" as used herein include microorganisms like fungi or bacteria responsible or being part of plant diseases.

That is, the spray according to the present invention is particularly useful in preventing infection with plant pathogens including microorganisms and infestation with insects as well as protecting against infestation with plant pathogens.

That is, the spray formulation may include spores of the *B. bassiana* endophyte allows to protect against *Ceutorhynchus napi, Brassicogethes aeneus or Ceutorhynchus assimilis, Plutella xylostellain* oilseed rapes plants. For example, the plants are oilseed rapes and the endophyte is *B. bassiana,* like *B*. *bassiana* isolate DSM 24665.

In another aspect, the present invention relates to a method of preventing or treating infestation of plants with plant pathogens and plant pests, in particular, of crop plants with crop pests, including or comprising the step of applying the spray formulation according to the present invention to plants, in particular, part of the plants for colonisation of the plants with endophytes.

The term "plants" as used herein includes also parts of the plants, like leaves, seed, stems, branches, roots, shoots or sprouts unless otherwise indicated. It is preferred, that the spray formulation according to the present invention is at least applied on the leaves and shoots of the plant. If necessary, bringing out the spray formulation onto the plants may be repeated. It is preferred that the method according to present invention is a method wherein a spore of the *B. bassiana* isolate, e.g. the *B. bassiana* strain deposited under the number DSM 24665, are sprayed on oilseed rapes for protecting said plants against insect pests, like *Ceutorhynchus napi, Brassicogethes aeneus or Ceutorhynchus assimilis.*

*Beauveria bassiana* which may be used in the spray formulation according to the present invention as well as in the methods according to the present invention are effective in infecting and killing a wide variety of economically important insects, particularly soil-born insects, but also including some ground- and canopy-dwelling insects. Insects which may be controlled by the *Beauveria bassiana* include root weevils, rootworms, wireworms, maggots, bugs, aphids, beetles, root weevils, borers, fruit flies, soil grubs, root maggots, termites, and ants, particularly corn rootworm (*Diabrotica spp.*), black vine weevil (*Otiorhynchus sulcatus*), citrus root weevil (*Diaprepes abbreviatus*), sweet potato weevil (*Cylas formicarius*), sugarbeet root maggot (*Tetanops myopaeformis*), cabbage maggot (*Delia radicum*), onion maggot (*Delia antigua*), turnip maggot (*Delia floralis*)*,* seedcorn maggot (*Delia platura*), carrot rust fly (*Psila rosae*), Japanese beetle (*Popillia japonica*), European chafer (*Rhizotrogus majalis*), coffee berry borer (Hypothenemus hampei), stem borer (Chilo partellus), subterranean termite (*Reticulitermes* and *Coptotermes spp.*)*.* In addition, certain canopy dwelling, especially bark dwelling, insects may be controlled by *Beauveria bassiana* of this invention. These insects include emerald ash borer (*Agrilus planipennis*), gypsy moth (*Lymantria dispar*), and the pecan weevil (*Curculio caryae*)*.*

The spray formulation according to the present invention is suitable as bio-pesticide against herbivorous insects or other pests, as detailed in the following:
**maize pests:** Corn earworm (*Helicoverpa zea*), Fall armyworm (*Spodoptera frugiperda*), Common armyworm (*Pseudaletia unipuncta*), Stalk borer (*Papaipema nebris),* Corn leaf aphid (*Rhopalosiphum maidis),* European corn borer (Os*trinia nubilalis*) (ECB), Corn silkfly (*Euxesta stigmatis*), Lesser cornstalk borer *(Elasmopalpus lignosellus),* Corn delphacid (*Peregrinus maidis*), Western corn rootworm (*Diabrotica virgifera virgifera* LeConte), Southwestern corn borer (*Diatraea grandiosella*), Maize weevil (*Sitophilus zeamais*)
**rapeseed pests:** Meligethes aeneus, Harlequin bug (*Murgantia histrionica*), Flea beetles (*Phyllotreta* sp.), Diamondback moth (*Plutella xylostella*), Bertha armyworm (*Mamestra configurata),* Root maggot (*Delia* sp.), Grasshoppers, Lygus bugs (*Lygus spp*.), Bronzed field beetle larvae, Snails and slugs.
**cotton pests:** Boll weevil, cotton bollworm pink bollworm (*Pectinophora gossy-piella)*; the chili thrips (*Scirtothrips dorsalis*), and the cotton seed bug (*Oxycarenus hyalinipennis*)*.*
**Cacao pests:** Cocoa pod borer (Conopomorpha cramerella), cocoa mirids or capsids
**Wheat pests:** The Flame (*Axylia putris*), Rustic shoulder-knot (*Apamea sor-dens*), setaceous, hebrew character (*Xestia c-nigrum*), Turnip moth *(Agrotis segetum*).
**Sorghum pests:** Chilo partellus, Busseola fusca, Sesamia calamistis.

In another aspect, the present invention provides a kit comprising spores of endophytes, preferably entomopathogenic endophytes and in a separate container a spray formulation according to the present invention without containing said spores of said endophytes. The spores of the endophytes may be present in a lyophilised form or dried form while the remaining spray formulation according the present invention excluding the spores of said endophytes are in form of a concentrate, in a lyophilised form or as a ready to use formulation. The kit may be used for preparing the spray formulation according to the present invention.

The kit according to present invention is particularly useful in the method according to present invention for preventing or treating infestation of plants with plant pathogens and plant pests including insect pests, in particular, e.g. preventing or treating infestation of crop plants with crop pests. The spray formulation ready for use may be prepared immediately before spraying the spray formulation onto the plants. The skilled person is well aware of the suitable means for spraying the spray formulation.

The present invention will be described further by the way of examples.

### Example 1

### Preparation of spray formulation

Spray formulation as shown in table 1 have been prepared as follows: The spray formulations were prepared as water-based solutions. All components, with the exception of the *B. bassiana* spores, were sterilized before using. The surfactants Break-Thru S240 (Evonik Industries, Essen, Germany) and Trition X 114 (Applichem, Darmstadt, Germany), the humectant gelatine 280 Bloom (Gelita, Eberbach, Germany) and the nutrient sugar beet molasses (Südzucker, Warburg, Germany) were mixed with boiling water and stored at room temperature until spores were added. Immediately after their addition the formulation were mixed carefully and sprayed on the plants.
For formulations with titanium dioxide 2ml/L of a diluted nitric acid solution having a pH 3.38 was added to allow the titanium dioxide to be present in form of a suspension.

**Table 1**

| **No.** | **Surfactant** | **Humectant** | **Nutrient** | **UV-protecting compound** | **Spores** |
|---|---|---|---|---|---|
| 1 | Break-Thru S240 (0.1%) | | sugar beet molasses (1%) | titanium dioxide (1%) | 10⁶ spores/mL |
| 2 | Trition X 114 (0.1%) | | sugar beet molasses (1%) | | 10⁶ spores/mL |
| 3 | Break-Thru S240 (0.1 %) | gelatine 280 Bloom (0.1%) | | | 10⁶ spores/mL |
| 4 | Trition X 114 (0.1%) | gelatine 280 Bloom (0.1 %) | | | 10⁶ spores/mL |
| 5 | Break-Thru S240 (0.1 %) | gelatine 280 Bloom (0.1%) | sugar beet molasses (1%) | | 10⁶ spores/mL |
| 6 | Trition X 114 (0.1%) | gelatine 280 Bloom (0.1 %) | sugar beet molasses (1%) | | 10⁶ spores/mL |
| 7 | Break-Thru S240 (0,1 %) | | | | 10⁶ spores/mL |
| 8 | Trition X 114 (0.1%) | | | | 10⁶ spores/mL |
| 9 | Break-Thru S240 (0.1 %) | gelatine 280 Bloom (0.1%) | sugar beet molasses (1%) | | |
| 10 | Trition X 114 (0.1%) | gelatine 280 Bloom (0.1%) | sugar beet molasses (1%) | | |
| 11 | Break-Thru S240 (0.1 %) | | Bakers yeast (1%) | | |
| 12 | water | | | | 10⁶ spores/mL |

### Example 2

### Testing of spray formulations on oilseed rape plants

The formulations were sprayed with a commercial spray nozzle on the 6th secondary leaf of 7 weeks old oilseed rape plants and incubated at approximately 45 % relative humidity and 20°C. At the first 48 h after application the treated leaves were wrapped with a plastic bag, so that a relative humidity of 95 % was obtained. The applied amount of spray formulation was determined with the weight of the tank before and after spraying. After 7 weeks the colonization of the 8th secondary leaves were detected with PCR, re-isolation and microscopy.

### Example 3

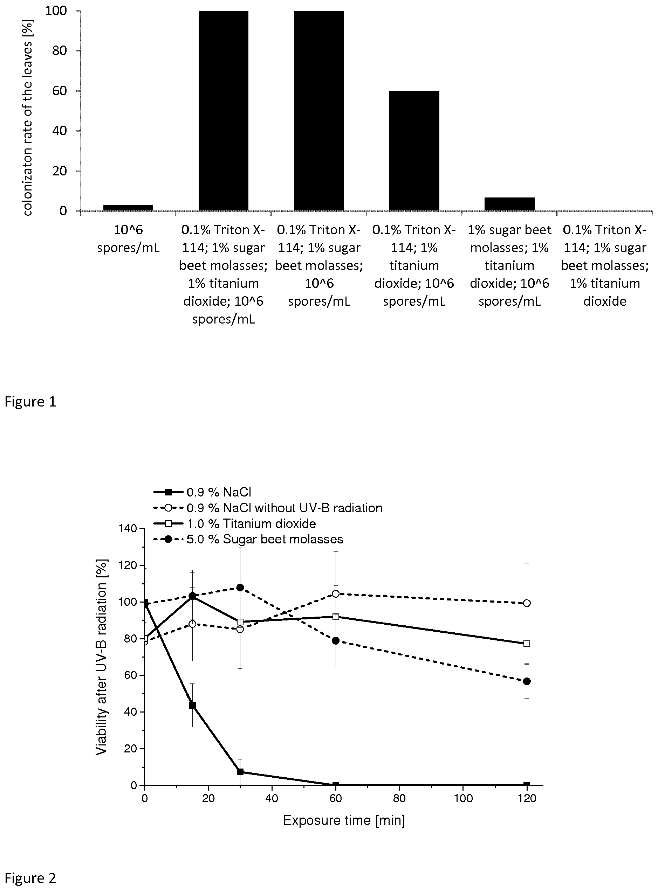

The spray formulations were applied on the leaf apex of oilseed rape plants and incubated. After 2 weeks in control cross-sections any fungal grow could be shown, but in cross-sections of mid rips of plants treated with *B. bassiana* intercellular fungal growth could be shown, see figure 1. While high colonization rates are shown for formulations containing the surfactant, the nutrient, the spores and, optionally, the UV-protecting compound, leaving out the surfactant or the nutrient reduces the colonization rates remarkably. The control outmost right not containing spores and the control with water only, outmost left, demonstrate almost no colonization. Of note, the tests are performed without UV-irradiation. In addition, it is noted that sugar beet molasses display both features, being a nutrient and having UV protecting properties.

Out of the different spray formulation containing different amounts of humectants, nutrients, UV-absorbing components and surfactants, formulation No. 2 of table 1 gave the best results containing Triton X-114 as surfactant, sugar beet molasses as nutrient and titanium dioxide as UV-protecting compound.

### Example 4

### Viability B. bassiana under UV-B light

Different UV protection agents like 5 % sugar beet molasses and 1 % titanium dioxide, which were acidified with nitric acid to pH 6.0, were autoclaved for 20 min at 121°C and afterwards, inoculated with 10⁶ spores/mL. Besides, 0.9 % NaCl with 10⁶ spores/mL served as control. Then 10 mL of each sample were placed on a petri dish with a diameter of 65 mm and were treated with UV-B radiation (UVM 57 Handheld UV Lamp 302 nm, UVP, Cambridge, UK) for 0, 10, 30, 60 and 120 min. The intensity of radiation on the top of the spore suspension was adjusted to 100±5 µW/cm².

The influence of different UV protection agents on the viability of spores after UV-B radiation was investigated because sunlight is one of the most damaging factors faced by fungi on leaves. Two potential UV protection agents, namely 1.0 % titanium dioxide and 5 % sugar beet molasses, were mixed with 10⁶ spores/mL and were treated with UV-B radiation for 120 min, which is shown in figure 2. In view of the standard deviations, the viability of spores in the 0.9 % NaCl solution without UV-B radiation remained stable over time. In contrast, the viability of spores in the 0.9 % NaCl solution decreased to 0 % and the spore suspension with 5 % sugar beet molasses as well as 1 % titanium dioxide exhibited a viability of 79±14 % and 92±17 %, respectively. During the ongoing UV-B radiation a further reduction of the viabilities to 57±14 % for molasses and 77±11 % for titanium dioxide were observed.

### Example 5

### Colonization assay on oilseed rape plants

Spray formulations consisting of different compositions of 0.1 % surfactant, 0.1 % humectant, 1 % nutrient and 1 % UV protection agent were autoclaved separately for 20 min at 121°C. After thorough mixing, the spore suspension was added so that the final spray formulation contained 10⁶ spores/mL. The control formulation did not contain fungal biomass. The spray formulations were brushed on the adaxial side of 6^{th} secondary leaves from 7-weeks-old oilseed rape plants. After 12 h darkness, the 12-h photoperiod was started. To increase the relative humidity to 95 %, the treated leaves were wrapped with plastic bags for the first 48 h. The concentration of spores per area was determined by the weight of applied spray formulation. After 7 weeks the 8^{th} secondary leaves were harvested for the detection of endophytic colonization with *B. bassiana.*

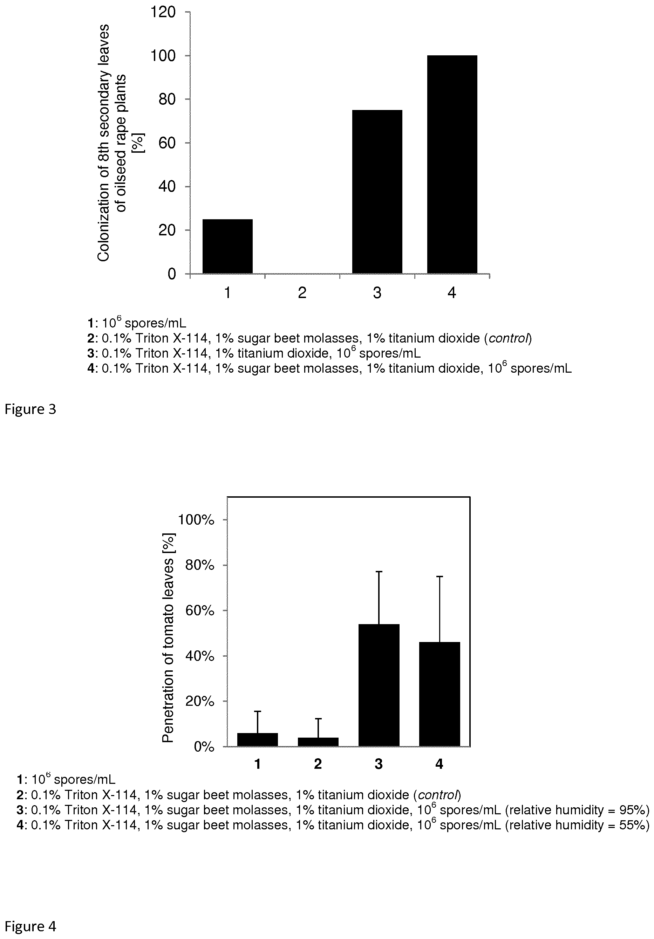

The novel spray formulations were applied on the 6^{th} secondary leaves of 7-weeks-old oilseed rape plants (n=8). It was observed that the addition of a surfactant led to a 15-fold increase of the adhering concentration of formulation and therefore, to an increased concentration of fungal spores from 5.6±1.2x10⁵ spores/leaf to 0.4±0.1x10⁵ spores/leaf. After an incubation time of 7 weeks, endophytic hyphae growth of *B*. *bassiana* was detected in the tissue of 8^{th} secondary leaves by light microscopy. To quantify colonization from the microscopic detection of *B. bassiana,* four plants from eight replicates were randomly selected and for logistical reasons one leaf mid rip cross-section per plant was investigated. The amount of colonized 8^{th} secondary leaves was calculated based on these 4 cross-sections, see figure 3. Hyphae growth was not detected in the treatments without fungal biomass, figure 3, lane 2. Furthermore, *B. bassiana* was detected in 25 % of 8^{th} secondary leaves of plants which were treated with a water-spore suspension, figure 3, lane 1. Formulations based on 0.1 % Break-Thru® or 0.1 % Triton X-114, optionally with 1 % sugar beet molasses, and in combination with 1 % titanium dioxide and 10⁶ spores/mL increase the colonization of leaves. The colonization of 8^{th} secondary leaves increased up to 75 % for plants treated with the formulation based on Triton X-114 in the presence of titanium dioxide and even to 100 % for plants treated with the formulation based on Triton X-114 in combination with the sugar beet molasses and in the presence of titanium dioxide. Besides the microscopic detection of *B. bassiana* in the leaves, the fungus was also detectable via re-isolation and subsequent nested PCR. Moreover, *B. bassiana* was re-isolated from some of the plants treated with the formulation containing 0.1 % Triton X-114, 1 % molasses, 1 % titanium dioxide and 10⁶ spores/mL.

**Table 2**

| **No.** | **Surfactant** | **Nutrient** | **UV-protecting compound** | **Spores** |
|---|---|---|---|---|
| 1 | | | | 10⁶ spores/mL |
| 2 | Trition X-114 (0.1%) | sugar beet molasses (1%) | titanium dioxide (1%) | |
| 3 | Trition X-114 (0.1%) | | titanium dioxide (1%) | 10⁶ spores/mL |
| 4 | Trition X-114 (0.1%) | sugar beet molasses (1%) | titanium dioxide (1%) | 10⁶ spores/mL |

### Example 6

### Penetration assay on tomato plants

Besides the application on oilseed rape, the spray formulations were also applied on two 2^{th} secondary leaves of 6-weeks-old tomato plants. The sprays were brushed on approximately 2 cm of the leaf tips and treated leaf areas were marked. After 12 h darkness, the 12-h photoperiod was started. To increase the relative humidity up to 95 %, the treated leaves were wrapped with plastic bags for 48 h. After 7 days the leaf tips were cut off and the untreated area of the leaves were harvested for the detection of endophytic colonization with *B. bassiana.*

Different spray formulations based on 0.1 % Triton X-114, 1 % sugar beet molasses and 1 % titanium dioxide with 10⁶ spores/mL were tested of their potential to colonize tomato leaves with *B. bassiana* (n=10). In this "penetration assay" (figure 4) the suspensions were brushed on the leaf tips and endophytic hyphae growth of B. *bassiana* should be detected in the untreated leaf base after 7 days. Hyphae growth was observed in cross-sections of leaf mid rips. In each case five cross-sections per plant were investigated. The penetration of leaves was calculated based on these cross-sections. Furthermore, the mid rip cross-section was considered as penetrated, when one hyphae was found. The mean penetration of a treatment was calculated by ten treated plants. Hyphae growth was detected in 4 % of the mid rip cross-sections of leaves which are not treated with fungal spores and in 6 % of the mid rip cross-sections of leaves treated with the water-spore-suspension. Furthermore, endophytic hyphae growth was also detected microscopically in 46 % of the non-treated areas of the leaves treated with all components of the formulation after 7 days. An incubation at a relative humidity of 95 % led to a further increase of penetrated tomato leaves to 54 %.

**Table 3**

| **No.** | **Surfactant** | **Nutrient** | **UV-protecting compound** | **Spores** | **Relative humidity** |
|---|---|---|---|---|---|
| 1 | | | | 10⁶ spores/mL | 55% |
| 2 | Trition X-114 (0.1%) | sugar beet molasses (1%) | titanium dioxide (1%) | | 55% |
| 3 | Trition X-114 (0.1%) | sugar beet molasses (1%) | titanium dioxide (1%) | 10⁶ spores/mL | 95% |
| 4 | Trition X-114 (0.1%) | sugar beet molasses (1%) | titanium dioxide (1%) | 10⁶ spores/mL | 55% |

Compared to water treatment the use of UV-protectors could increase the viability of treated spores after UV-radiation for 60 minutes by 79-92 %, furthermore germinations and growth of the endophytes on leaves, penetration and colonisation as well as efficacy in bioassays with *Plutella xylostella* as a crop pest demonstrates the usefulness of the spray formulation according to the present invention.

## Claims

1. A spray formulation for colonisation of plants with spores of endophytes comprising:
- a surfactant in a range of from 0.01 to 5 wt.-% based on the total weight of the spray formulation;
- an UV-protecting compound in a range of from 0.05 to 7 wt.-% based on the total weight of the spray formulation;
- a nutrient in a range of from 0.1 to 7 wt.-% based on the total weight of the spray formulation wherein the nutrient is selected from carbon sources, sugars, or yeast extract;
- spores of the endophytes in an amount of 10² to 10⁸ spores/mL spray formulation; and,
- optionally, hydrophilic liquid.

2. The use of a spray formulation according to claim 1 for colonization of crop plants or ornamental plants including oilseed rape, tomato, corn (Zea *mays*), grain, cotton, potato, sugar beet, coffee plants, grapevine, broad beans, chickpea, tobacco, soy, cacao plants, opium poppy, bean, cabbage, pine, rice, date palm, banana, orchids, or sorghum, with spores of endophytes.

3. The formulation according to claim 1 wherein the spores of said endophytes are fungal spores.

4. The spray formulation according to any one of claims 1 and 3 wherein the endophytes are entomopathogenic endophytes being selected from the fungi *Beauveria bassiana* and *Metarhizium anisopliae.*

5. The spray formulation according to any one of claims 1, 3 and 4 further comprising an adhesive agent in the range of from 0.1 % to 5 % wt.-% based on the total weight of the spray formulation.

6. The spray formulation according to any one of claims 1 and 3-5 further comprising at least one of the following components of a humectant in the range of from 0.1 to 5 wt.-% based on the total weight of the spray formulation, a filler in the range of from 15 to 45 wt.-% based on the total weight of the spray formulation, a stimulant in the range of from 0.01 to 1 wt.-% based on the total weight of the spray formulation, an anti-foam in the range of from 0.01 to 1 wt.-% based on the total weight of the spray formulation, and/or a thickener in the range of from 0.1 to 3 wt.-% based on the total weight for the spray formulation.

7. The spray formulation according to any one of claims 1 and 3-6 wherein the surfactant is a non-ionic surfactant.

8. The spray formulation according to any one of claims 1 and 3-7 wherein the humectant is selected from biopolymers.

9. The spray formulation according to any one of claims 1 and 3-8 wherein the spray formulation is adapted for application as an emulsion, a concentrate, or a wettable powder.

10. The use of a spray formulation according to any one of the preceding claims in plant protection against plant pathogens and plant pests.

11. A method of preventing or treating infestation of plants with plant pathogens and plant pests and pathogens, including the step of applying a spray formulation according to any one of claims 1 and 3-8 to plants for colonization of said plants with endophytes.

12. The method according to claim 11 wherein the plants are oil seed rapes.

13. The method according to claims 11 or 12 wherein the endophyte is *Beauveria bassiana* isolate deposited under the No.DSM 24665.

14. A kit comprising spores of endophytes and, in a separate container, a spray formulation as defined in any one of claims 1 and 3-9 without containing said spores of said endophytes
wherein the spores are in a lyophilised form or dried form and the remaining spray formulation is in form of a concentrate, lyophilised or ready to use formulation.

## Patentansprüche

1. Eine Sprühformulierung zur Kolonisation von Pflanzen mit Sporen von Endophyten umfassend:
- ein Tensid in einem Bereich von 0,01 bis 5 Gew.% bezogen auf das Gesamtgewicht der Sprühformulierung;
- eine UV-Schutzverbindung in einem Bereich von 0,05 bis 7 Gew. % bezogen auf das Gesamtgewicht der Sprühformulierung;
- einen Nährstoff in einem Bereich von 0,1 bis 7 Gew.% bezogen auf das Gesamtgewicht der Sprühformulierung, wobei der Nährstoff ausgewählt ist aus Kohlenstoffquellen, Zucker oder Hefeextrakten;
- Sporen der Endophyten in einer Menge von 10² bis 10⁸ Sporen/ml der Sprühformulierung, und
- gegebenenfalls eine hydrophile Flüssigkeit.

2. Die Verwendung einer Sprühformulierung nach Anspruch 1 zur Kolonisation von Kulturpflanzen oder Zierpflanzen einschließlich Ölraps, Tomate, Mais (Zea *mays*), Getreide, Baumwolle, Kartoffel, Zuckerrübe, Kaffeepflanzen, Weinrebe, Saubohne, Kichererbse, Tabak, Soja, Kakaopflanzen, Schlafmohn, Bohne, Kohl, Kiefer, Reis, Dattelpalme, Banane, Orchideen oder Sorghum, mit Sporen der Endophyten.

3. Die Formulierung nach Anspruch 1, wobei die Sporen der Endophyten Pilzsporen sind.

4. Die Formulierung nach einem der Ansprüche 1 oder 3, wobei die entomopathogenen Endophyten ausgewählt sind aus den Pilzen *Beauveria bassiana* und *Metarhizium anisopliae.*

5. Die Sprühformulierung nach Anspruch 1, 3 oder 4 weiterhin umfassend ein Haftmittel im Bereich von 0,1 Gew.% bis 5 Gew.% bezogen auf das Gesamtgewicht der Sprühformulierung.

6. Die Sprühformulierung nach einem der Ansprüche 1 oder 3 bis 5 weiterhin umfassend mindestens eine der folgenden Komponenten eines Feuchthaltemittels in einem Bereich von 0,1 bis 5 Gew.% bezogen auf das Gesamtgewicht der Sprühformulierung, eines Fühlstoffes in einem Bereich von 15 bis 45 Gew. % bezogen auf das Gesamtgewicht der Sprühformulierung, ein Stimulanz in einem Bereich von 0,01 bis 1 Gew. % bezogen auf das Gesamtgewicht der Sprühformulierung, ein Antischaummittel im Bereich von 0,01 bis 1 Gew. % bezogen auf das Gesamtgewicht der Sprühformulierung, und/oder ein Verdickungsmittel im Bereich von 0,1 bis 3 Gew.% bezogen auf das Gesamtgewicht der Sprühformulierung.

7. Die Sprühformulierung nach einem der Ansprüche 1 oder 3 bis 6, wobei das Tensid ein nicht ionisches Tensid ist.

8. Die Sprühformulierung nach einem der Ansprüche 1 oder 3 bis 7, wobei das Feuchthaltemittel ausgewählt ist aus Biopolymeren.

9. Die Sprühformulierung nach einem der Ansprüche 1 oder 3 bis 8, wobei die Sprühformulierung für die Anwendung als Emulsion, Konzentrat oder benetzbaren Pulver geeignet ist.

10. Die Verwendung einer Sprühformulierung nach einem der vorherigen Ansprüche zum Pflanzenschutz gegenüber Pflanzenpathogenen und Pflanzenschädlingen.

11. Ein Verfahren zum Vorbeugen oder Behandeln eines Befalls von Pflanzen mit Pflanzenpathogenen und Pflanzenschädlingen und Pathogenen einschließlich dem Schritt des Anwendens einer Sprühformulierung nach einem der Ansprüche 1 oder 3 bis 8 auf Pflanzen zur Kolonisation dieser Pflanzen mit Endophyten.

12. Das Verfahren nach Anspruch 11, wobei die Pflanzen Ölraps sind.

13. Das Verfahren nach einem der Ansprüche 11 oder 12, wobei der Endophyt *Beauveria bassiana* Isolat hinterlegt mit der Nummer DSM 24665 ist.

14. Ein Kit umfassend Endophytensporen und in einem separaten Behälter, eine Sprühformulierung wie in einen der Ansprüche 1 oder 3 bis 9 definiert diese Endophytensporen nicht enthaltend, wobei die Sporen in einer lyophilisierten Form oder getrockneten Form vorliegen und die restliche Sprühformulierung in Form eines Konzentrats lyophilisiert oder als gebrauchsfertige Lösung vorliegt.

## Revendications

1. Formulation en spray destinée à la colonisation de plantes par des spores d'endophytes, comprenant :
- un agent tensioactif dans une plage allant de 0,01 à 5% en poids sur la base du poids total de la formulation en spray ;
- un composé de protection contre les UV dans une plage allant de 0,05 à 7% en poids sur la base du poids total de la formulation en spray ;
- un nutriment dans une plage allant de 0,1 à 7% en poids sur la base du poids total de la formulation en spray, où le nutriment est choisi parmi des sources de carbone, des sucres ou un extrait de levure ;
- des spores des endophytes selon une quantité allant de 10² à 10⁸ spores/ml de la formulation en spray ; et
- éventuellement, un liquide hydrophile.

2. Utilisation d'une formulation en spray selon la revendication 1, pour la colonisation de plantes de culture ou de plantes ornementales, y compris le colza, la tomate, le maïs (*Zea mays*), les grains, le coton, la pomme de terre, la betterave sucrière, les plantes de café, la vigne, les fèves, les pois chiches, le tabac, le soja, les plantes de cacao, le pavot, le haricot, le chou, le pin, le riz, le palmier dattier, la banane, les orchidées, ou le sorgho, par des spores d'endophytes.

3. Formulation selon la revendication 1, dans laquelle les spores desdits endophytes sont des spores fongiques.

4. Formulation en spray selon l'une quelconque des revendications 1 et 3, dans laquelle les endophytes sont des endophytes entomopathogènes qui sont choisis parmi les champignons *Beauveria bassiana* et *Metarhizium anisopliae.*

5. Formulation en spray selon l'une quelconque des revendications 1, 3 et 4, comprenant en outre un agent adhésif dans une plage allant de 0,1% à 5% en poids sur la base du poids total de la formulation en spray.

6. Formulation en spray selon l'une quelconque des revendications 1 et 3-5, comprenant en outre au moins l'un parmi les composants suivants, un humectant dans une plage allant de 0,1 à 5% en poids sur la base du poids total de la formulation en spray, une charge dans une plage allant de 15 à 45% en poids sur la base du poids total de la formulation en spray, un stimulant dans une plage allant de 0,01 à 1% en poids sur la base du poids total de la formulation en spray, un agent antimousse dans une plage allant de 0,01 à 1% en poids sur la base du poids total de la formulation en spray, et/ou un épaississant dans une plage allant de 0,1 à 3% en poids sur la base du poids total de la formulation en spray.

7. Formulation en spray selon l'une quelconque des revendications 1 et 3-6, dans laquelle l'agent tensioactif est un agent tensioactif non ionique.

8. Formulation en spray selon l'une quelconque des revendications 1 et 3-7, dans laquelle l'humectant est choisi parmi les biopolymères.

9. Formulation en spray selon l'une quelconque des revendications 1 et 3-8, la formulation en spray étant adaptée pour une application sous forme d'une émulsion, d'un concentré, ou d'une poudre mouillable.

10. Utilisation d'une formulation en spray selon l'une quelconque des revendications précédentes, en phyto-protection contre des pathogènes de plantes et des nuisibles de plantes.

11. Méthode destinée à empêcher ou traiter une infestation de plantes par des agents phytopathogènes et des nuisibles et pathogènes de plantes, comportant l'étape consistant à appliquer une formulation en spray selon l'une quelconque des revendications 1 et 3-8, à des plantes pour la colonisation desdites plantes par des endophytes.

12. Méthode selon la revendication 11, dans laquelle les plantes sont des colzas.

13. Méthode selon les revendications 11 ou 12, dans laquelle l'endophyte est un isolat de *Beauveria bassiana* déposé sous le numéro DSM 24665.

14. Kit comprenant des spores d'endophytes, et, dans un conteneur séparé, une formulation en spray telle que définie selon l'une quelconque des revendications 1 et 3-9, sans contenir lesdites spores desdits endophytes, où les spores se trouvent sous une forme lyophilisée ou sous une forme séchée et le reste de la formulation en spray se trouve sous la forme d'un concentré, d'une formulation lyophilisée ou prête à l'emploi.
